# EUROPEAN PATENT APPLICATION

(11) **EP 4 563 472 A1**
(43) Date of publication of application: **04.06.2025**
(21) Application number: 24216235.2
(22) Date of filing: 28.11.2024
(51) Int. Cl.: B64D 11/06, B60N 2/02, B60N 2/30

(54) **ECONOMY CLASS PASSENGER SEAT ROW CONVERTIBLE TO A BED**

(30) Priority: 29.11.2023 IN 202341080908; 23.07.2024 US 202418781141
(71) Applicant: B/E Aerospace, Inc., Winston-Salem, NC 27105 (US)
(72) Inventor: KANDUKURI, Ravindra Ramulu, Secunderabad (IN); PRATHIPATI, Krishna Chaitanya, 5000050 Hyderbad (IN)
(74) Representative: Dehns

(57) **Abstract**

A seat row (100) including at least two laterally adjacent seats (102, 104, 106), wherein each seat includes a seat pan assembly (200, 300, 400) and a cushion assembly (110) configured to be positioned atop the seat pan assembly. In embodiments, the seat pan assembly includes a frame subassembly (202, 302, 402) including a first frame member (204, 304, 404) and a second frame member (206, 306, 406) rotatably coupled to the first frame member, wherein the second frame member is configured to rotate between a first position residing with the first frame member and a second position forward of the first frame member. In embodiments, the seat pan assembly further includes a diaphragm subassembly including a first diaphragm (214, 314, 408) and a second diaphragm (216, 316, 412). In use, the seat row is configured to convert between separate seats and a single bed.

## Description

### CROSS-REFERENCE TO RELATED APPLICATION

This nonprovisional application claims the benefit of priority of Indian Patent Application No. 202341080908 filed November 29, 2023 for ECONOMY CLASS PASSENGER SEAT ROW CONVERTIBLE TO A BED and of US 18/781,141 filed 23 July 2024.

### TECHNICAL FIELD AND BACKGROUND

The present disclosure relates generally to provisions for sleeping in an economy class cabin, and more particularly, to a seat row wherein each individual seat includes a seat pan assembly deployable to form part of a bed.

Passenger cabins in airliners typically include separate economy and premium seating classes. Premium seating classes, where comfort is paramount, can include highly adjustable passenger seats configured to transition from an upright sitting position to a bed through various intermediate sitting positions. Economy seating classes, where density is paramount, can include integrated seat rows with limited backrest recline.

Most passengers are not able to assume a comfortable sleeping position in an economy class seat considering the relatively steep angle of a reclined backrest, fixed position of the seat pan, lack of a leg rest, and close proximity to other passengers. As such, passengers not able to afford the high cost of a premium class seat are at a sleeping disadvantage, particularly on long haul flights.

Therefore, what is needed is a provision for sleeping in an economy class cabin when cabin occupancy permits seat row conversion.

### BRIEF SUMMARY

In one aspect, embodiments of the inventive concepts disclosed herein are directed to a seat row including at least two laterally adjacent seats. In embodiments, each seat includes a seat pan assembly including a frame subassembly including a first frame member and a second frame member rotatably coupled to the first frame member, wherein the second frame member is configured to rotate between a first position residing with the first frame member and a second position forward of the first frame member. Each seat pan assembly further includes a diaphragm subassembly including a first diaphragm and a second diaphragm, wherein the first diaphragm is attachable to the first frame member and the second diaphragm is attachable to the second frame member. In embodiments, each seat further includes a cushion assembly including first and second cushions configured to be positioned on the first and second diaphragms.

In at least some embodiments, when the second frame member is in the first position, the second frame member is positioned within an interior space defined by the first frame member.

In at least some embodiments, when the second frame member is in the first position, the second frame member is positioned atop the first frame member.

In at least some embodiments, when the second frame member is in the first position, the first frame member is positioned in the second frame member.

In at least some embodiments, the first diaphragm is attached to the second diaphragm, the first diaphragm is folded on the second diaphragm when the second frame member is in the first position, and when the second frame member is in the second position, the first diaphragm is configured to unfold from the second diaphragm and attach to the first frame member.

In at least some embodiments, the first diaphragm is attached to the second diaphragm, at least one third diaphragm is attached to the second diaphragm, the first diaphragm is configured to fold and unfold in a longitudinal direction of the second diaphragm, and the at least one third diaphragm is configured to fold and unfold in a lateral direction of the second diaphragm.

In at least some embodiments, the first frame member is fixed, the first diaphragm is attached to the first frame member and is detached from the second diaphragm, a third diaphragm is attached to the second diaphragm, and the second and third diaphragms are positionable on opposite sides of the second frame member when the second frame member is in the second position.

In at least some embodiments, the first and second frame members are substantially parallel in each of the first and second positions of the second frame member, the second frame member is rotatable about 180 degrees relative to the first frame member, and an axis of rotation of the second frame member is positioned at a forward end of the first frame member.

In at least some embodiments, each seat further includes at least one adjustable strap configured to secure between the second frame member and a forward seat row to support a forward end of the second frame member when the second frame member is in the second position.

According to another aspect, embodiments of the inventive concepts disclosed herein are directed to an economy class passenger seat row including at least two, and preferably three, laterally adjacent passenger seats. In embodiments, each passenger seat includes a seat pan assembly including a frame subassembly including a first frame member and a second frame member rotatably coupled to the first frame member, wherein the second frame member is configured to rotate between a first position residing with the first frame member and a second position forward of the first frame member, and a diaphragm subassembly including a first diaphragm and a second diaphragm, wherein the first diaphragm is attachable to the first frame member and the second diaphragm is attachable to the second frame member. In use, when each second frame member is positioned in the first position, the economy class passenger seat row is configured for sitting, and when each second frame member is positioned in the second position, the economy class passenger seat row forms a bed.

According to a further aspect, embodiments of the inventive concepts disclosed herein are directed to a seat row including at least two laterally adjacent passenger seats, wherein the seat row is convertible between at least two separate passenger seats and one bed. In embodiments, each passenger seat includes a seat pan assembly including a forward deployable frame member, a diaphragm subassembly, and a cushion assembly.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is an isometric view of a passenger seat row shown converted to form a bed, in accordance with example embodiments of this disclosure;
FIG. 2 is an isometric view of a seat pan assembly according to a first embodiment of the present disclosure;
FIGS. 3A and 3B are respective top and bottom perspective views of a frame subassembly of the seat pan assembly according to the first embodiment;
FIG. 4 is an isometric view of a passenger seat row according to the first embodiment shown prior to seat pan assembly deployment;
FIGS. 5A-D are sequential views illustrating seat pan assembly deployment to form a bed;
FIG. 6 is an isometric view of a seat pan assembly according to a second embodiment of the present disclosure;
FIGS. 7A and 7B are respective top and bottom perspective views of a frame subassembly of the seat pan assembly according to the second embodiment;
FIG. 8 is an isometric view of a passenger seat row according to the second embodiment shown prior to seat pan assembly deployment;
FIGS. 9A-C are sequential views illustrating seat pan assembly deployment to form a bed;
FIG. 10 is an isometric view of a seat pan assembly according to a third embodiment of the present disclosure;
FIGS. 11A and 11B are respective top perspective and sectional views of a frame subassembly of the seat pan assembly according to the third embodiment;
FIGS. 12A and 12B are sequential views illustrating seat pan assembly deployment to form a bed;
FIGS. 13A and 13B are sequential views illustrating seat pan cushion deployment for use with any of the first, second, and third embodiments of the present disclosure;
FIG. 14 illustrates a safety restraint for use with the converted bed according to any of the first, second, and third embodiments of the present disclosure; and
FIG. 15 illustrates adjustable strapping for supporting the forward end of the deployed seat pan assembly according to any of the first, second, and third embodiments of the present disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to passenger seat rows configured to convert between separate seats and a single bed. In embodiments, the passenger seats rows include two or more laterally adjacent passenger seats, and preferably at least three laterally adjacent passenger seats. In embodiments, the passenger seat rows are economy class seat rows configured for installation in an aircraft passenger cabin, wherein the rows are arranged to form a column of longitudinally aligned seat rows and seats. When configured as passenger seats, each seat row has the appearance of any other seat row to provide a uniform look throughout the cabin. To configure the seat row as a bed, each seat pan assembly deploys in a forward direction to substantially bridge the gap between the front of the seat pan (when configured as a seat) and the forward seat. In embodiments, when each seat pan assembly within the seat row is deployed, the formed bed length is substantially the length of the seat row, and the formed bed width is about double the length of a seat pan prior to deployment.

In embodiments, a cabin such as an aircraft passenger cabin may be equipped with one or more seat rows according to the present disclosure. In use, when cabin occupancy permits, the one or more seat rows may be converted from separate passenger seats to a bed. In embodiments, when a number of seats in the passenger cabin are not sold, passengers may be reassigned to make the seat row available to a single passenger for purchase at a premium, and that passenger purchasing the seat row then has the option to convert the seat row to a bed during flight. In some embodiments, several seat rows according to the present disclosure may be strategically positioned within the cabin to provide the ability to convert at least some of the seat rows to beds during flight. In embodiments, the convertible seat rows may be positioned at the front or rear of the cabin for more privacy for sleeping.

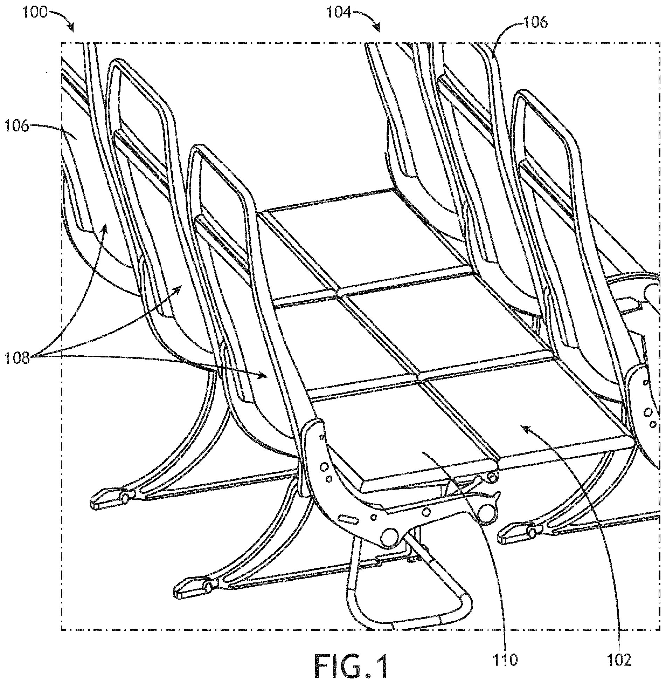

FIG. 1 illustrates a passenger seat row 100 shown converted to form a bed 102. The seat row 100 may be positioned directly aft of another seat row 104 that may or may not be like the first seat row 100. When converted to form the bed 102, the bed extends substantially between the spaced backrests 106. In embodiments, the seat row may extend between a fuselage wall and a longitudinal aisle such that bed ingress and egress is directly from the longitudinal aisle. The seat row 100 shown includes three laterally adjacent passenger seats 108; however, in other embodiments the seat row 100 may include two laterally adjacent passenger seats or more than three laterally adjacent passenger seats. Three laterally adjacent passenger seats are shown as a non-limiting example considering three seats are common in an aircraft economy class row and form a comfortable bed length for sleeping. As discussed in detail below, each passenger seat 108 includes a cushion assembly 110, that when unfolded, substantially covers the seat pitch, and the cushion assemblies 110 align side-by-side to form a substantially continuous bed.

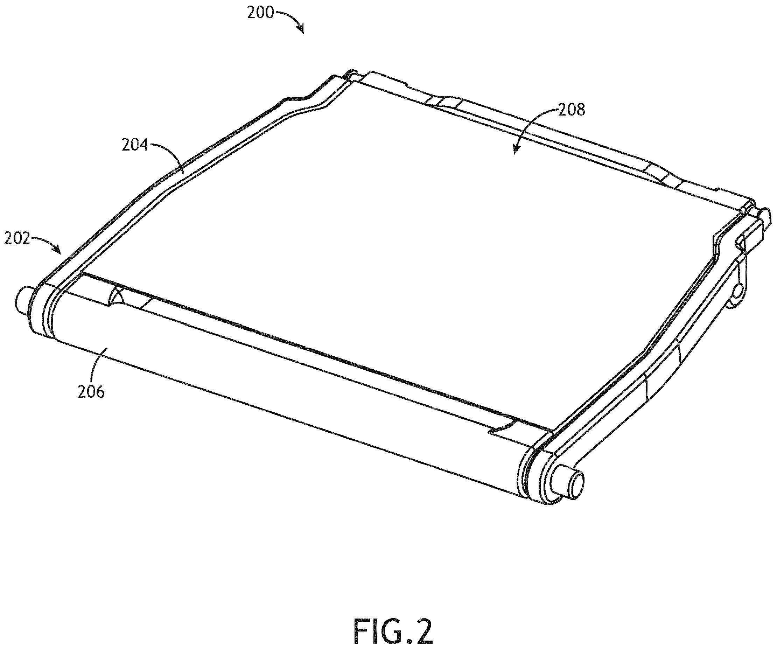

FIG. 2 illustrates a seat pan assembly 200 according to a first embodiment of the present disclosure. Each separate seat within the same row includes a seat pan assembly 200. The seat pan assembly 200 includes a frame subassembly 202 including a first frame member 204 and a second frame member 206 rotatably coupled to the first frame member 204. The seat pan assembly 200 further includes a diaphragm subassembly 208 including a first diaphragm and a second diaphragm. As discussed below, the first diaphragm is attachable to the first frame member 204 and the second diaphragm is attachable to the second frame member 206. FIG. 2 shows a first position of the second frame member 206 configured for sitting.

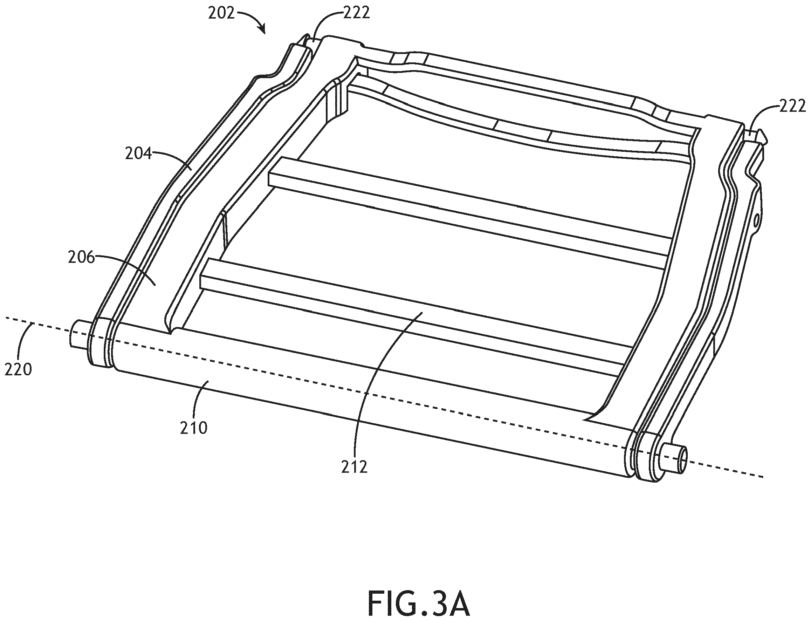

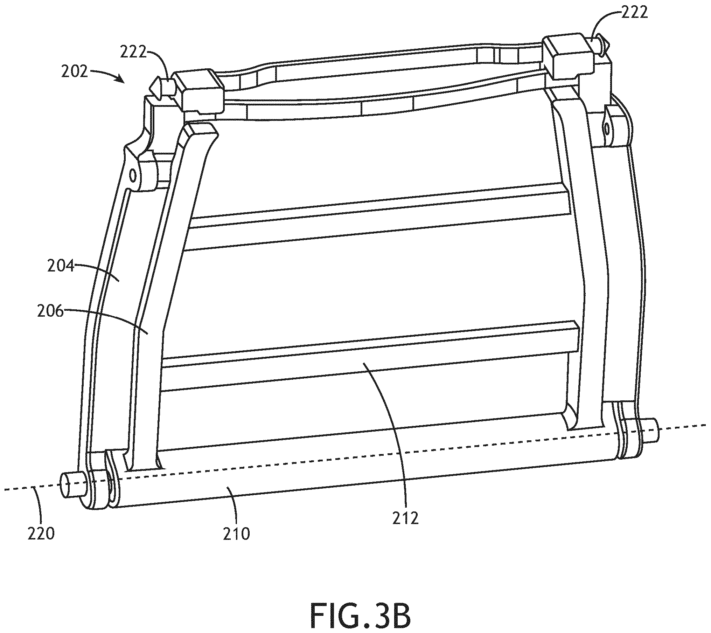

FIGS. 3A and 3B illustrate the frame subassembly 202 according to the first embodiment. The first frame member 204 defines an interior space and the second frame member206, when in the first position of the second frame member 206, resides within the interior space. An axis of rotation 220 is positioned at the front of the frame subassembly 202 about which the second frame member 206 rotates between the first position for sitting and the second position forming the bed. In embodiments, the second frame member 206 may be pivoted on both ends. In some embodiments, the first frame member 204 may define an elongated ledge on the inboard side of each lateral side. When in the first position as shown, the second frame member 206 seats on the ledges for support and to limit downward rotation. As shown, the second frame member 206 includes a connecting rod 210 and transverse stiffeners 212. Lateral features 222, for instance mushroom heads, are positioned at one end of the second frame member 206 such that, when the second frame member 206 is rotated to the second position forming the bed, the lateral features 222 are presented at the forward edge of the bed for securing adjustable straps further attachable to a forward seat row. When the second frame member 206 is rotated to the first position forming the seat, the lateral features 222 may be engaged to positively lock the second frame member 206 in the seat position.

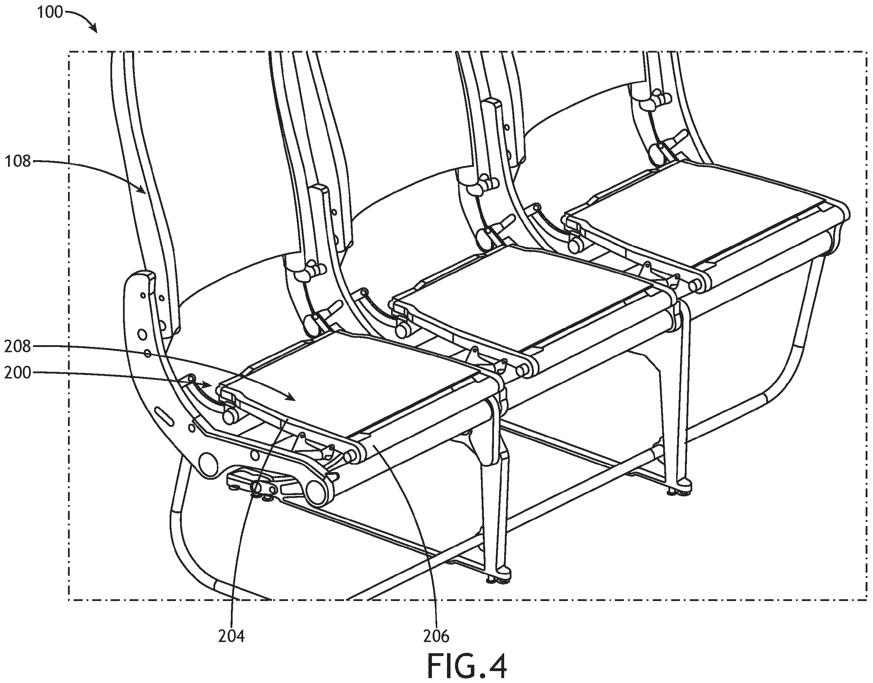

FIG. 4 illustrates the seat pan assemblies 200 of the seat row 100 each configured for sitting wherein the second frame member 206 resides within the interior space formed by the respective first frame member 204. All three seats 108 are shown configured as seats for sitting. Each of the diaphragm assemblies 208 are shown in a folded condition.

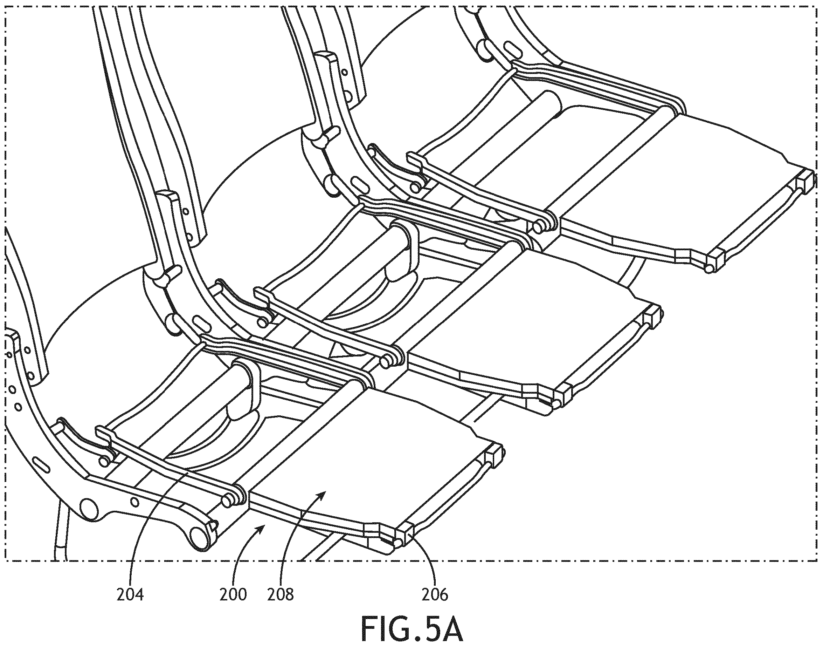

FIGS. 5A-5D are sequential views illustrating the method for converting each of the seat pan assemblies 200 from the sitting configuration shown in FIG. 4 to the bed configuration. Each seat pan assembly 200 is converted independently and manually. FIG. 5A shows the first step in which, with the cushion assembly and any dress covers removed, the second frame member 206 is rotated relative to the first frame member 204 and into a second position corresponding to a forward deployed position. The rotation is substantially 180 degrees such that the top and bottom sides of the second frame member 206 flip between the first and second positions. In some embodiments, the first and second frame members 204, 206 are substantially parallel and coplanar in each of the first and second positions of the second frame member 206.

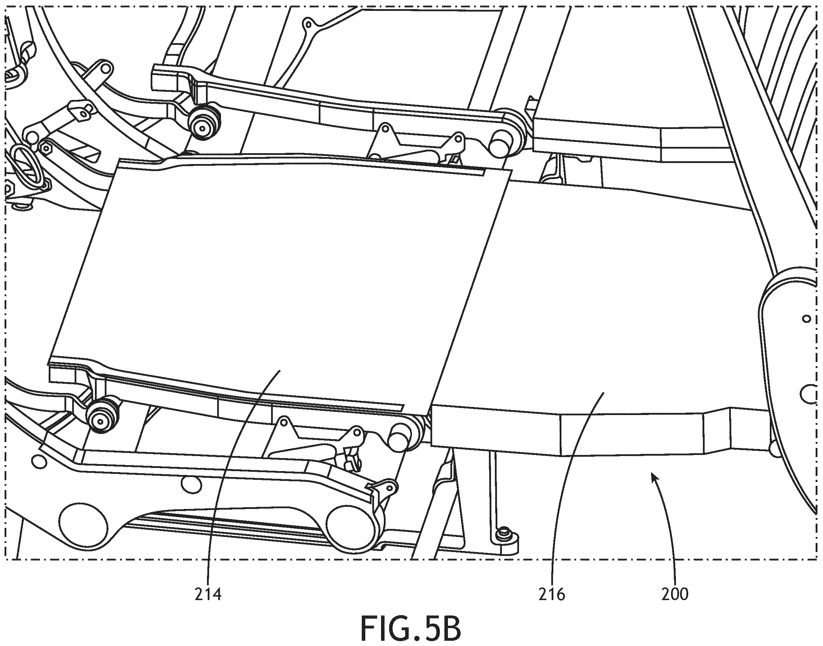

FIG. 5B shows a next step of the bed conversion in which the diaphragm assembly 208 is unfolded such that the first diaphragm 214 is positionable on the first frame member 204 and the second diaphragm 216 is positionable on the second frame member 206. In embodiments, the second diaphragm 216 is attached to the second frame member 206, the first diaphragm 214 is attached along one edge to the second diaphragm 216, the first diaphragm is carried with the second diaphragm 216 as the second frame member 206 is rotated, and the first diaphragm 214 unfolds from atop the second diaphragm 216 to cover and attach to the first frame member 204. In some embodiments, the diaphragms may cover, wrap around, and attach to their respective frame member using conventional fasteners. Fasteners for attaching the second diaphragm 216 to the second frame member 206 may be permanent, whereas fasteners for removable attaching the first diaphragm 214 to the first frame member 204 may be releasable, for instance hook and loop fasteners, snaps, or the like.

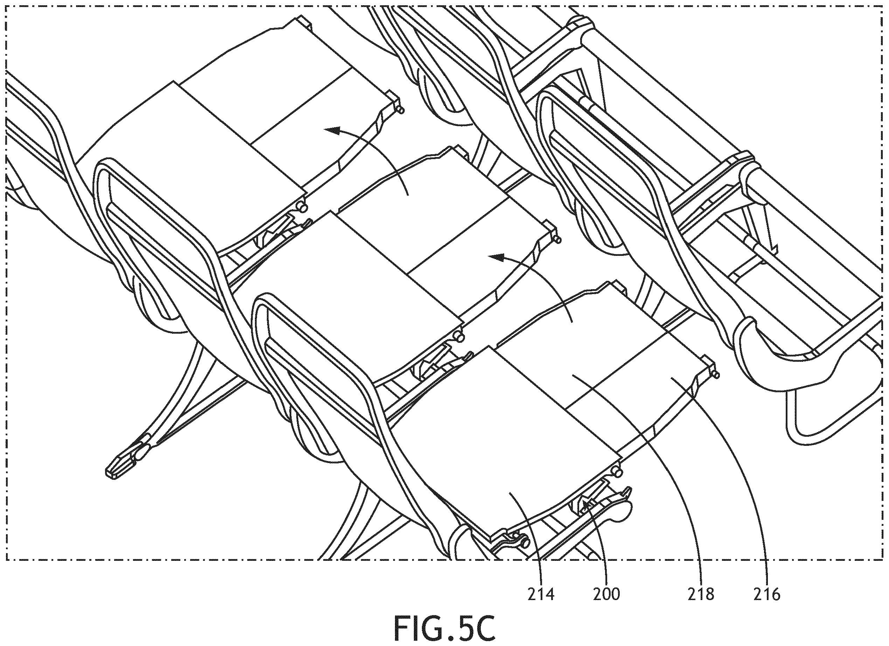

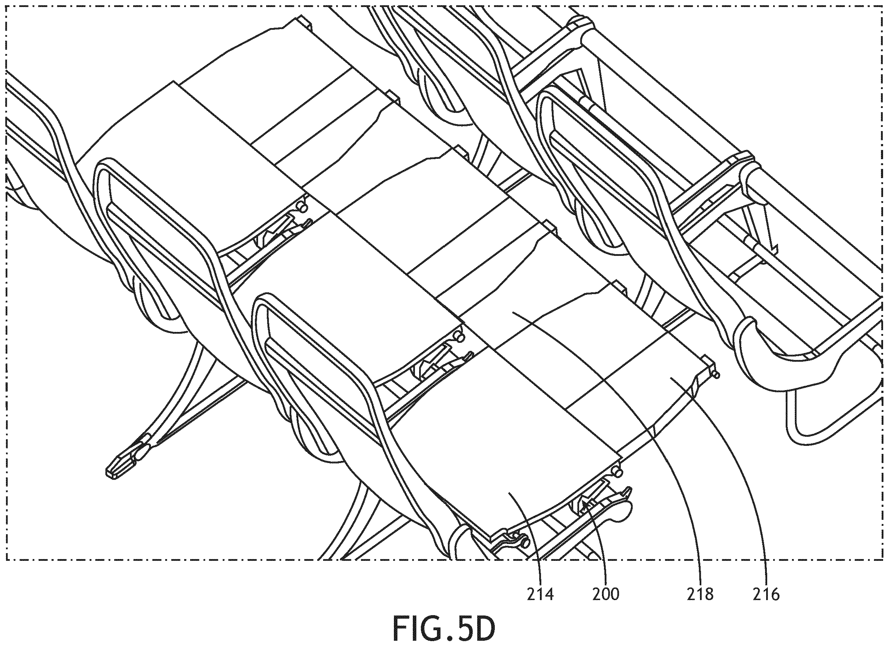

FIG. 5C and 5D show further steps of the bed conversion. In some embodiments, the lateral spacing of the deployed second frame member 206 may require coverings. As shown, the diaphragm assembly 208 further includes at least one third diaphragm 218 attached to the second diaphragm 216 along one lateral side. In use, the first diaphragm 214 unfolds from the second diaphragm 216 in the longitudinal direction to cover the first frame member 204, and the at least one third diaphragm 218 unfolds from the second diaphragm 216 in the lateral direction to meet the second diaphragm of the laterally adjacent diaphragm assembly or a third diaphragm of the laterally adjacent diaphragm assembly. In some embodiments, the laterally folding diaphragms may form a zippered or touch fastener connection at their interface.

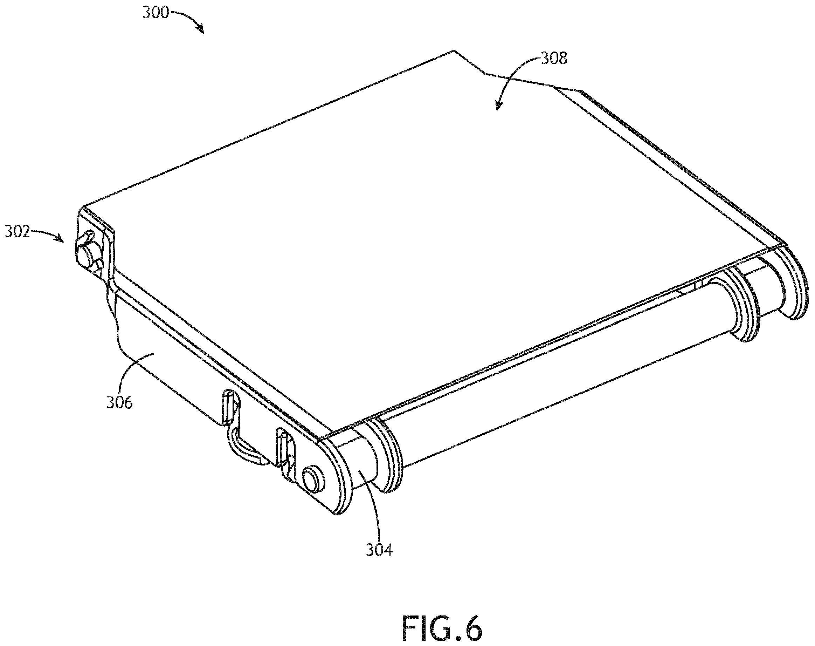

FIG. 6 illustrates a seat pan assembly 300 according to a second embodiment of the present disclosure. Each separate seat within the same row includes a seat pan assembly 300. The seat pan assembly 300 includes a frame subassembly 302 including a first frame member 304 and a second frame member 306 rotatably coupled to the first frame member 304. The seat pan assembly 300 further includes a diaphragm subassembly 308 including a first diaphragm and a second diaphragm. FIG. 6 shows a first position of the second frame member 306 configured for sitting.

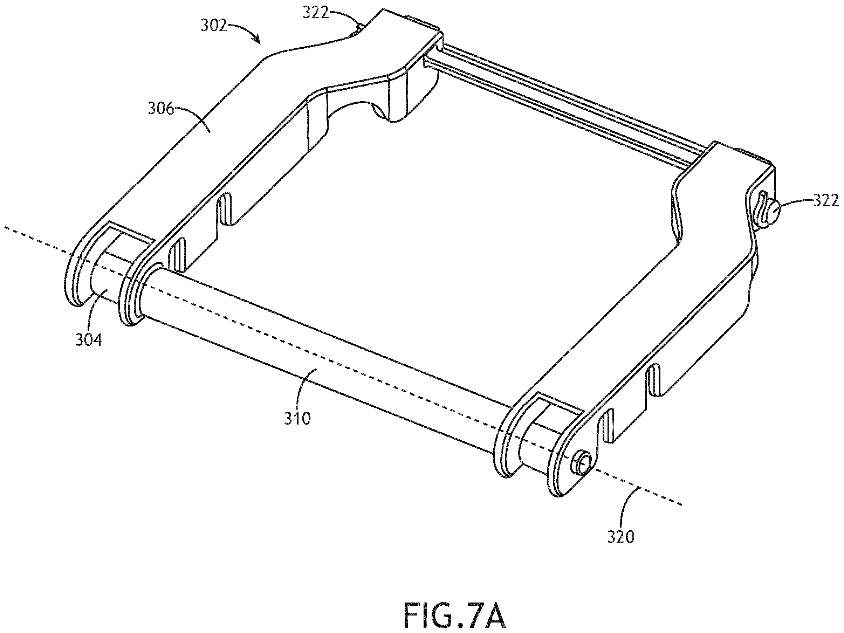

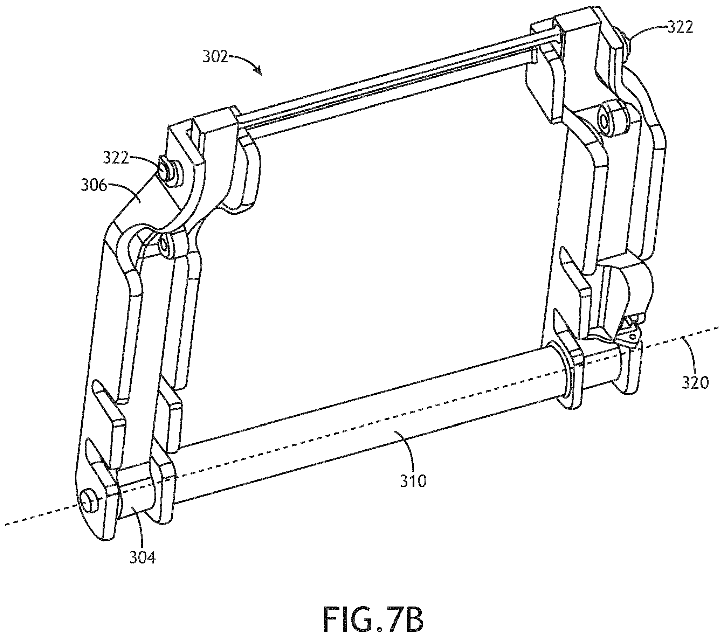

FIGS. 7A and 7B illustrate the frame subassembly 302 according to the second embodiment. The second frame member 306, when positioned in the first position, is positioned atop and substantially surrounding the top and lateral side of the first frame member 304. In other words, the first frame member is configured to be received within the second frame member 306. The axis of rotation 320 is again positioned at the front of the frame subassembly 302 such that the second frame member 306 rotates between the first position for sitting and the second position forming the bed. In embodiments, the second frame member 306 may be pivoted on both ends. As shown, the second frame member 306 includes a connecting rod 310. Lateral features 322, for instance mushroom heads, are positioned at one end of the second frame member 306 such that, when the second frame member 306 is rotated to the second position forming the bed, the lateral features 322 are presented at the forward edge of the bed for securing adjustable straps further attachable to a forward seat row. When the second frame member 306 is rotated to the first position forming the seat, the lateral features 322 may be engaged to positively lock the second frame member 306 in the seat position.

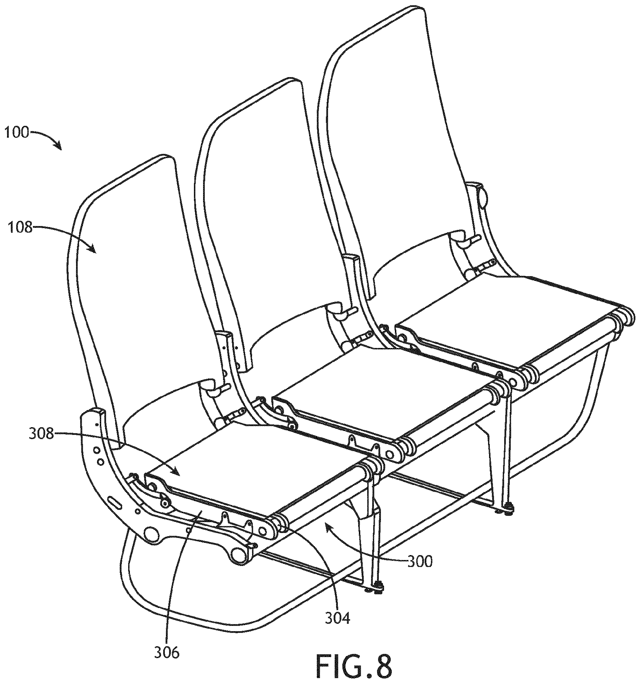

FIG. 8 illustrates the seat pan assemblies 300 of the seat row 100 each configured for sitting, wherein the second frame member 306 is positioned atop the first frame member 304. All three seats 108 are shown configured for sitting. Each of the diaphragm assemblies 308 are shown in a folded condition.

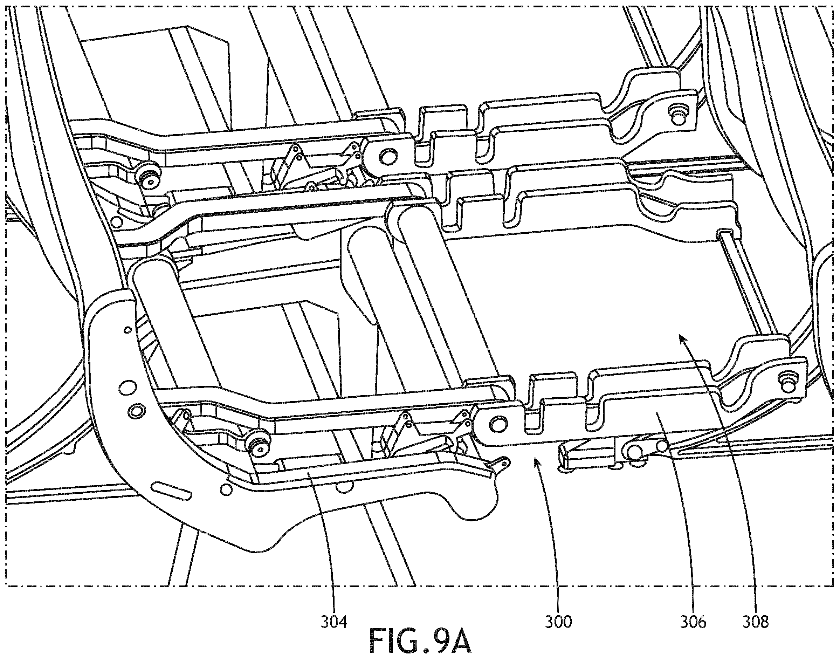

FIGS. 9A-9C are sequential views illustrating the method for converting each of the seat pan assemblies 300 from the sitting configuration shown in FIG. 8 to the bed configuration. Each seat pan assembly 300 is converted independently and manually. FIG. 9A shows the first step in which, with the cushion assembly and any dress covers removed, the second frame member 306 is rotated relative to the first frame member 304 and into a second position corresponding to a forward deployed position. The rotation is substantially 180 degrees such that the top and bottom sides of the second frame member 306 flip between the first and second positions. In some embodiments, the first and second frame members 304, 306 are substantially parallel and coplanar in each of the first and second positions of the second frame member 306.

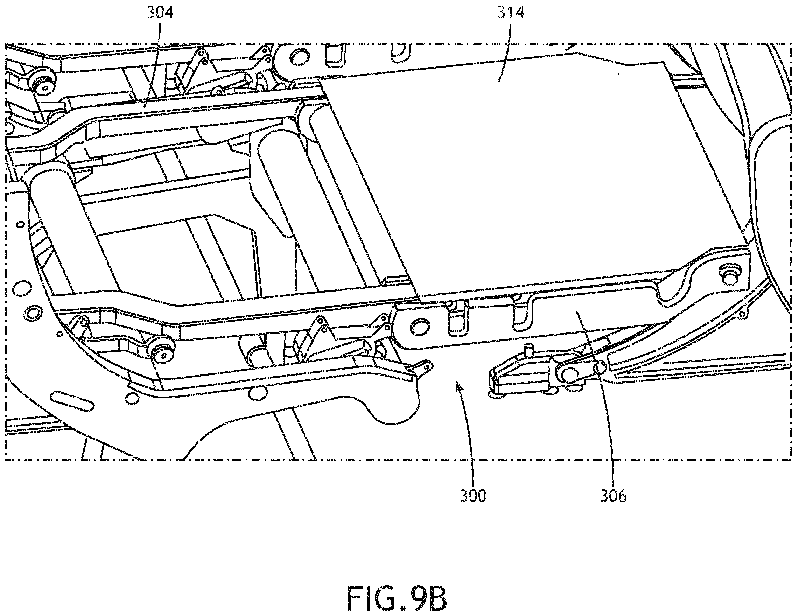

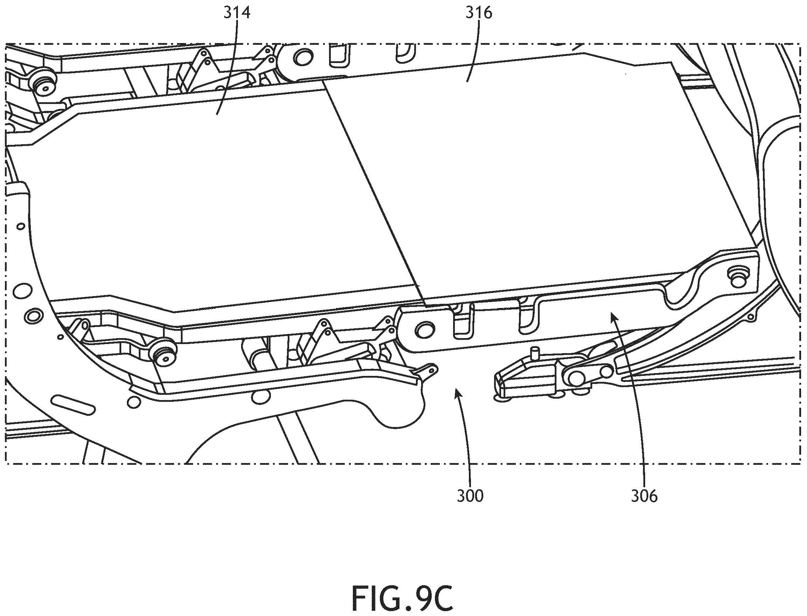

FIG. 9B and 9C show the next steps of the bed conversion in which the diaphragm assembly 308 is repositioned atop the deployed second frame member 306 such that the first diaphragm 314 is attachable to the first frame member 304 and the second diaphragm 316 is attachable to the second frame member 306. In embodiments, the second diaphragm 316 may be removably attachable to the second frame member 306, the first diaphragm 314 is attached along one edge to the second diaphragm 316, the first diaphragm is carried with the second diaphragm 316 as the second frame member 306 is rotated and repositioned atop the second frame member 306, and the first diaphragm 314 unfolds from atop the second diaphragm 316 to cover and attach to the first frame member 304. In some embodiments, the diaphragms may cover, wrap around, and attach to their respective frame member using conventional fasteners.

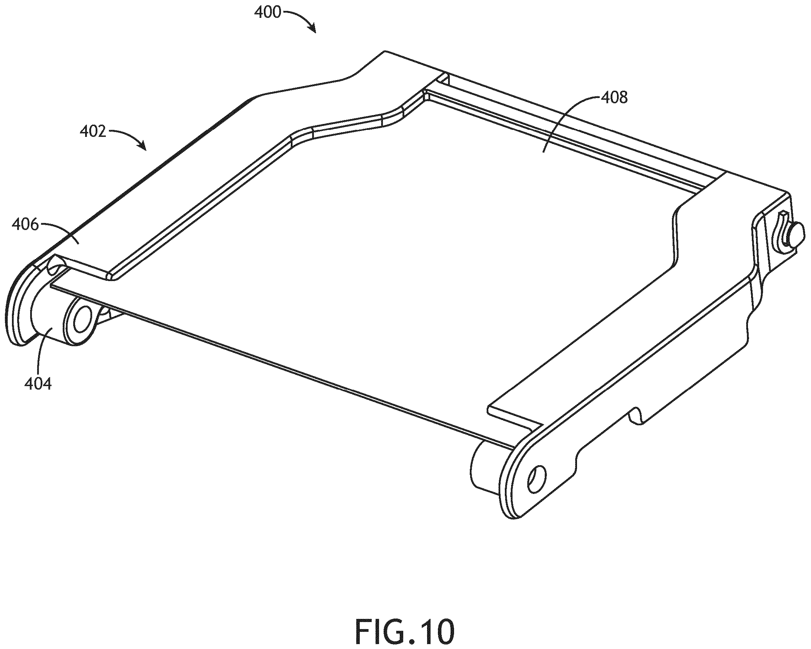

FIG. 10 illustrates a seat pan assembly 400 according to a third embodiment of the present disclosure. Each separate seat within the same row includes a seat pan assembly 400. The seat pan assembly 400 includes a frame subassembly 402 including a first frame member 404 and a second frame member 406 rotatably coupled to the first frame member 404. The seat pan assembly 400 further includes a first diaphragm 408 attached to the first frame assembly 404. FIG. 10 shows a first position of the second frame member 406 configured for sitting.

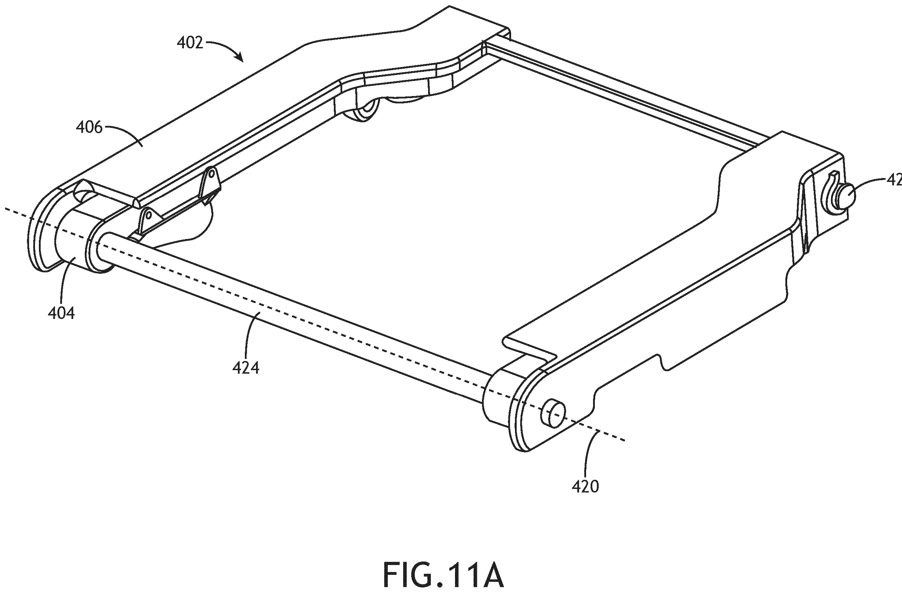

FIG. 11A illustrates the frame subassembly 402 according to the third embodiment. The second frame member 406, when positioned in the first position, is positioned atop and substantially surrounding the lateral sides of the first frame member 404. In other words, the lateral portions of the first frame member 404 are configured to be received within corresponding lateral portions of the second frame member 406. The axis of rotation 420 is again positioned at the front of the frame subassembly 402 such that the second frame member 406 is configured to rotate between the first position for sitting and the second position forming the bed. In embodiments, the second frame member 406 may be pivoted on both ends. As shown, the first frame member 404 includes a connecting rod 424. Like the other embodiments, lateral features 422, for instance mushroom heads, are positioned at one end of the second frame member 406 such that, when the second frame member 406 is rotated to the second position forming the bed, the lateral features 422 are presented at the forward edge of the bed for securing adjustable straps further attachable to a forward seat row. When the second frame member 406 is rotated to the first position forming the seat, the lateral features 422 may be engaged to positively lock the second frame member 406 in the seat position.

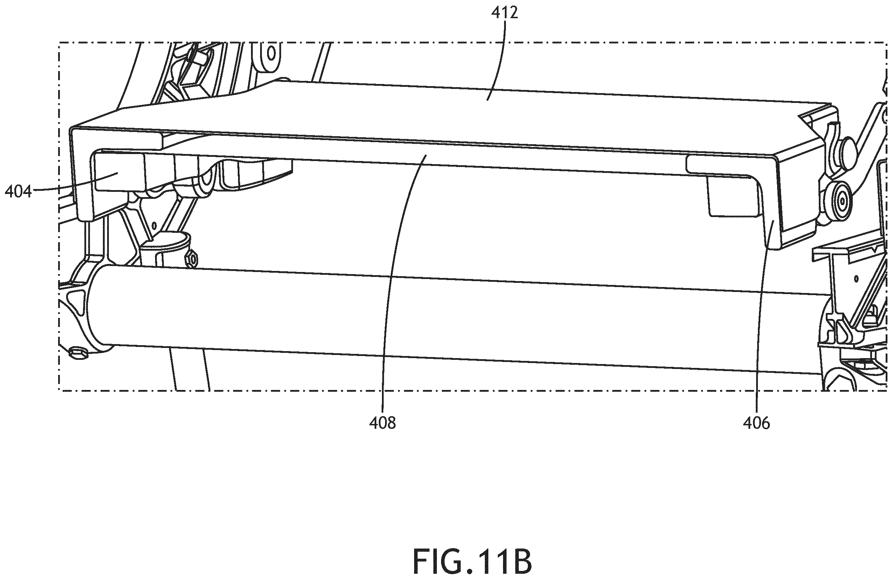

FIG. 11B is a sectional view illustrating the diaphragm configuration according to the third embodiment of the seat pan assembly. As shown, the first diaphragm 408 is attached to the first frame member 404. A separate second diaphragm 412 is attached to the second frame member 406 and moves with the second frame member 406 as the second frame member 406 rotates between the first and second positions.

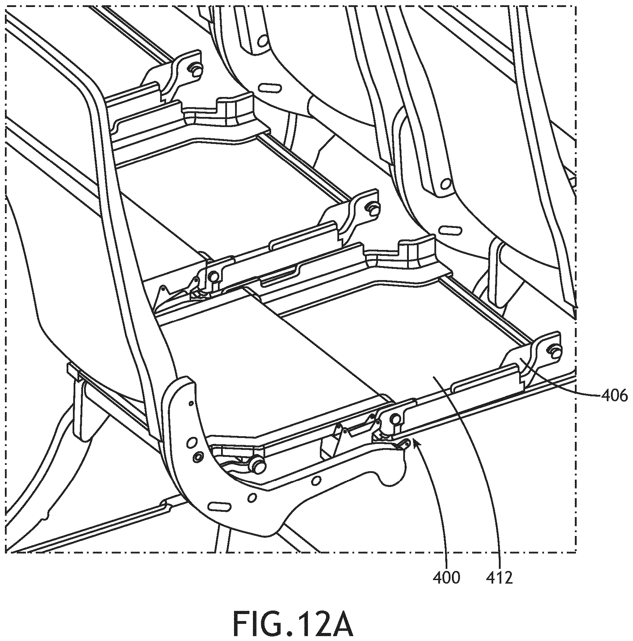

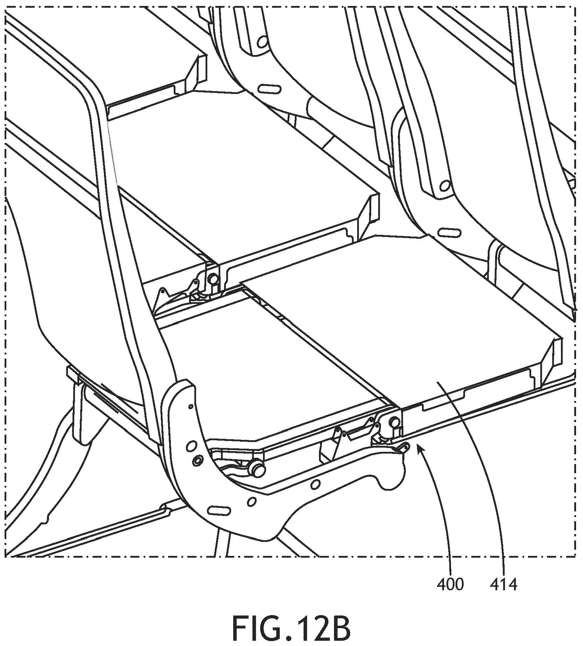

FIGS. 12A and 12B are sequential views illustrating the method for converting each of the seat pan assemblies 400 from the sitting configuration to the bed configuration. Each seat pan assembly 400 is converted independently and manually. FIG. 12A shows the second frame member 406 rotated to the second position and carrying with it the second diaphragm 412. FIG. 12B shows a third diaphragm 414, attached to the second diaphragm 412, rotating laterally to a position atop the second frame member 406. In an alternative embodiment, the second diaphragm 412 may detach from one side of the second frame member 406 (e.g., the `bottom') and be repositioned to the opposite side of the second frame member 406 (e.g., the 'top'). In each of the embodiments disclosed herein, the diaphragms serve to provide a support surface for positioning the cushion assemblies.

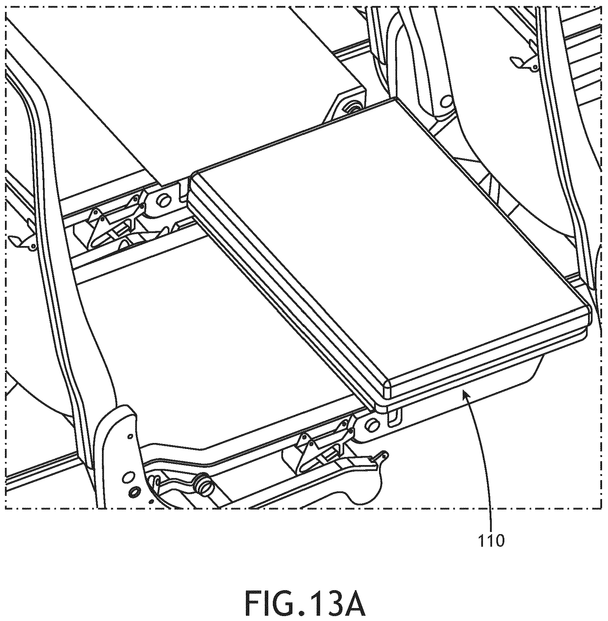

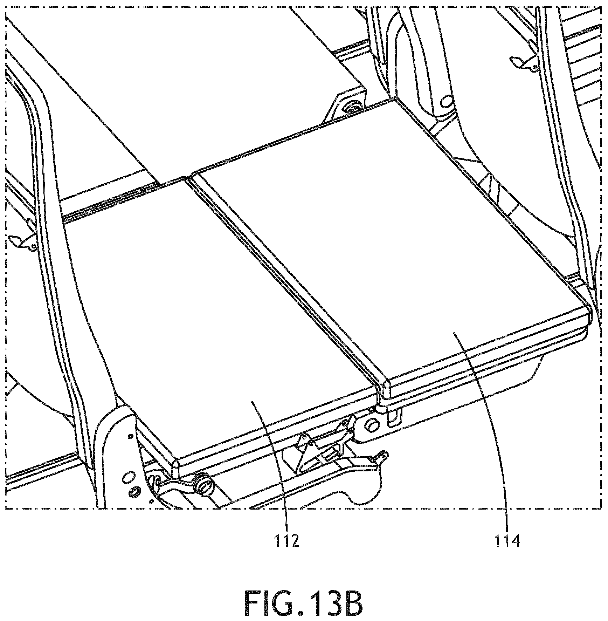

FIGS. 13A and 13B illustrate a configuration of the cushion assembly 110 according to the present disclosure. As shown, the cushion assembly is a bi-fold assembly including a first cushion 112 and a second cushion 114. In embodiments, the two cushions 112, 114 may be attached along one edge to permit folding and unfolding without allowing the cushions to be separated. In use for sitting, the first cushion 112 may be folded onto the second cushion 114, or vice versa. In use for the bed, the first cushion 112 may be unfolded from the second cushion to position the first cushion on the first frame member and the second cushion on the second frame member. In this configuration, the cushion thickness in bed mode is one half the cushion thickness in sitting mode.

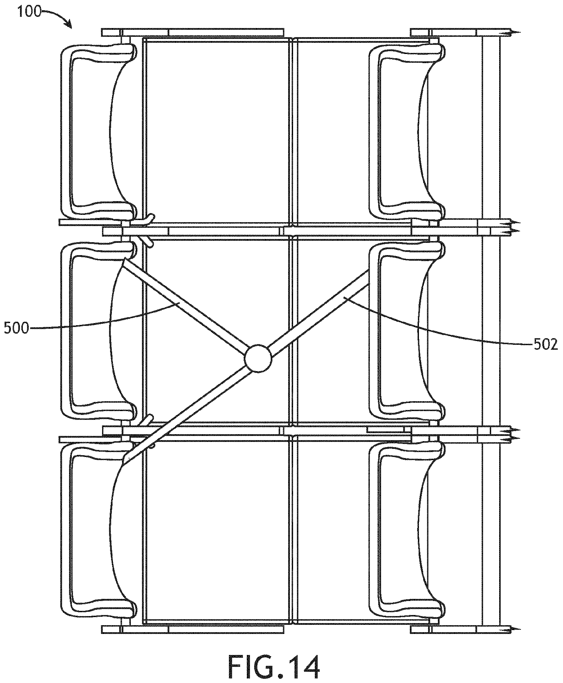

FIG. 14 illustrates a restraint 500 for use during bed mode of the seat row 100. In embodiments, the restraint may include existing belt portions from one or more of the seats in the seat row 100 and an additional portion 502 configured to anchor to the forward seat row or other structure positioned forward of the seat row 100.

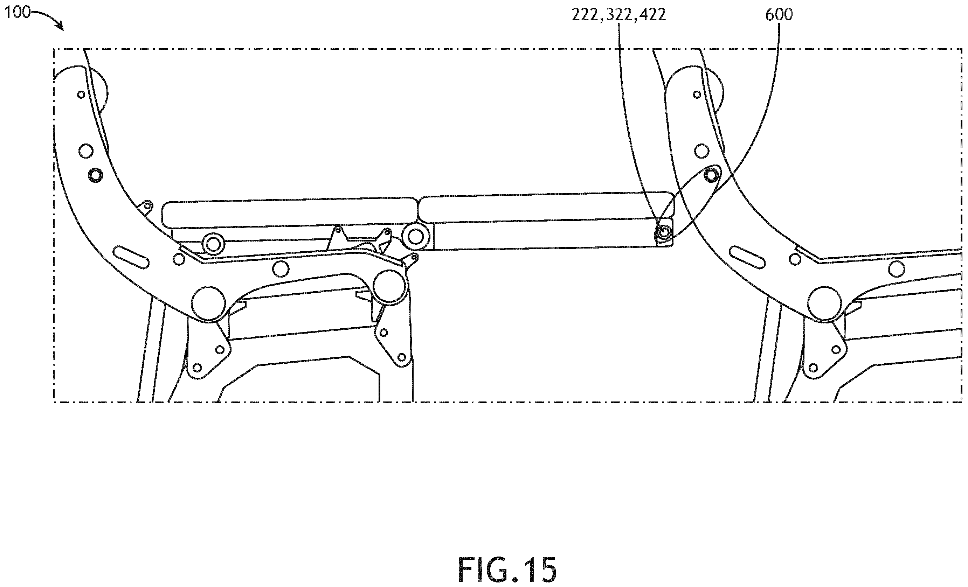

FIG. 15 illustrates an adjustable strap 600 configured to be positioned around the lateral feature 222, 322, 422 when the second frame member is rotated to the second position, and around structure positioned forward of the seat row 100. As shown, the immediate forward structure is another seat row and the adjustable strap is secured around structure of that seat row. In use, the adjustable strap, and preferably adjustable straps positioned on both sides of the second frame member, function to help support the weight of the cantilevered second frame member.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made within the scope of the invention as defined by the claims.

## Claims

1. A seat row (100) including at least two laterally adjacent seats (102, 104, 106), each seat comprising:
a seat pan assembly (200, 300, 400) comprising:
a frame subassembly (202, 302, 402) including a first frame member (204, 304, 404) and a second frame member (206, 306, 406) rotatably coupled to the first frame member, wherein the second frame member is configured to rotate between a first position residing with the first frame member and a second position forward of the first frame member; and
a diaphragm subassembly including a first diaphragm (214, 314, 408) and a second diaphragm (216, 316, 412) , wherein the first diaphragm is attachable to the first frame member and the second diaphragm is attachable to the second frame member;
a cushion assembly (110) including first and second cushions (112, 114) configured to be positioned on the respective first and second diaphragms.

2. The seat row according to claim 1, wherein, when the second frame member (206) is in the first position, the second frame member is positioned within an interior space defined by the first frame member (204).

3. The seat row according to claim 1, wherein, when the second frame member (406) is in the first position, the second frame member is positioned atop the first frame member (404).

4. The seat row according to claim 3, wherein, when the second frame member (306) is in the first position, the first frame member (304) is positioned in the second frame member.

5. The seat row according to any preceding claim, wherein:
the first diaphragm (214) is attached to the second diaphragm (216);
the first diaphragm is folded on the second diaphragm when the second frame member is in the first position; and
when the second frame member is in the second position, the first diaphragm is configured to unfold from the second diaphragm and attach to the first frame member.

6. The seat row according to any of claims 1 to 4, wherein:
the first diaphragm (214) is attached to the second diaphragm (216);
at least one third diaphragm (218) is attached to the second diaphragm;
the first diaphragm is configured to fold and unfold in a longitudinal direction of the second diaphragm; and
the at least one third diaphragm is configured to fold and unfold in a lateral direction of the second diaphragm.

7. The seat row according to any of claims 1 to 4, wherein:
the first frame member (404) is fixed;
the first diaphragm (408) is attached to the first frame member and is detached from the second diaphragm (412);
a third diaphragm (414) is attached to the second diaphragm; and
the second and third diaphragms are positionable on opposite sides of the second frame member when the second frame member is in the second position.

8. The seat row according to any preceding claim, wherein:
the first and second frame members (204, 304, 404) are substantially parallel in each of the first and second positions of the second frame member;
the second frame member (206, 306, 406) is rotatable about 180 degrees relative to the first frame member; and
an axis of rotation of the second frame member is positioned at a forward end of the first frame member.

9. The seat row according to any preceding claim, further comprising at least one adjustable strap (600) configured to secure between the second frame member and a forward seat row to support a forward end of the second frame member when the second frame member is in the second position.

10. The seat row according to any preceding claim, wherein the seat row is an economy class passenger seat row for installation in an aircraft cabin.

11. The economy class passenger seat row according to claim 10, comprising at least three laterally adjacent passenger seats.

12. A seat row (100) including at least two laterally adjacent passenger seats (102, 104, 106), wherein the seat row is convertible between at least two separate passenger seats and one bed, wherein each passenger seat comprises:
a seat pan assembly (200, 300, 400) comprising:
a frame subassembly (202, 302, 402) including a first frame member (204, 304, 404) and a second frame member (206, 306, 406) rotatably coupled to the first frame member, wherein the second frame member is configured to rotate between a first position residing with the first frame member and a second position forward of the first frame member; and
a diaphragm subassembly including a first diaphragm (214, 314, 408) and a second diaphragm (216, 316, 412), wherein the first diaphragm is attachable to the first frame member and the second diaphragm is attachable to the second frame member; and
a cushion assembly (110) including first and second cushions (112, 114) configured to be positioned on the respective first and second diaphragms.

13. The seat row according to claim 12, wherein, when the second frame member (206, 306, 406) is in the first position, the second frame member is positioned within an interior space defined by the first frame member (204, 304, 404) or atop the first frame member.
